# EUROPEAN PATENT SPECIFICATION

(11) **EP 4 520 404 B1**
(45) Date of publication and mention of the grant of the patent: **06.08.2025**
(21) Application number: 23203120.3
(22) Date of filing: 12.10.2023
(51) Int. Cl.: A63B 22/02

(54) **TREADMILL**
LAUFBAND
TAPIS ROULANT

(30) Priority: 09.09.2023 CN 202311168923
(43) Date of publication of application: 12.03.2025
(73) Proprietor: Shenzhen Yile Dynamic Technology Co., LTD, Shenzhen, Guangdong 518000 (CN)
(72) Inventor: LIU, Ren, Shenzhen, 518000 (CN); FAN, Jinsong, Shenzhen, 518000 (CN)
(74) Representative: Zaboliene, Reda

(56) References cited:
- WO-A1-2017/117209
- US-A1- 2002 103 057
- US-A1- 2016 287 930
- US-A1- 2017 106 233

## Description

### TECHNICAL FIELD

The present invention relates to the technical field of fitness equipment, and in particular to a treadmill.

### BACKGROUND

A running platform of a treadmill is designed with a slope to increase the exercise amount and exercise intensity of a user, and the exercise amount and exercise intensity of the user can be effectively adjusted by adjusting the slope of the running platform, so that the user can adjust the exercise amount and exercise intensity as required. However, a traditional treadmill driven by a motor often consumes a large amount of electricity, generates loud noise and has high cost. The speed of driving the movement is low in a case that other modes are used for driving. In a case that a longer stroke is required for adjustment, longer time is often required, which is difficult to meet the requirement of rapid adjustment by the user.

Document US 2017/106233 Al discloses a treadmill according to the preamble of claim 1.

### SUMMARY

Based on this, it is necessary to provide a treadmill to solve at least one of the above problems.

The present application provides a treadmill, including a running platform. The running platform includes a driving piece, a supporting piece, a border, and a supporting foot. The border includes two first borders and a second border located between the two first borders, and two ends of the second border are connected to the two first borders, respectively. The supporting foot includes two first plate bodies and a second plate body located between the two first plate bodies, and two ends of the second plate body are connected to the two first plate bodies, respectively. The two first borders and the second border are located above the two first plate bodies and the second plate body. The running platform further a first guide structure, the first guide structure is arranged at the second border and the first guide structure is a sliding groove, the driving piece is arranged at the second border; a lower end of the supporting piece is rotatably connected to the second plate body; an upper end of the supporting piece is slidably connected to the second border; the upper end of the supporting piece is slidably arranged at the sliding groove; the driving piece is configured to drive the upper end of the supporting piece to translate along the sliding groove such that the lower end of the supporting piece rotates around the upper end of the supporting piece, and the lower end of the supporting piece pushes the supporting foot to move towards or away from the border.

Further, the driving piece includes a first connecting end and a second connecting end, the first connecting end is a hinge, the second border is provided with a first shaft hole at a position corresponding to the first connecting end, and the first connecting end is hinged to the first shaft hole of the second border; the second connecting end is a lug, the lug is provided with a second shaft hole at a position corresponding to the supporting piece, the supporting piece is provided with a third shaft hole at a position corresponding to the second shaft hole of the lug, a shaft penetrates into the second shaft hole of the lug and the third shaft hole of the supporting piece to rotatably connect the supporting piece to the driving piece.

Further, the running platform further includes a second guide structure, the second guide structure is a U-shaped groove and is arranged at the second border, and the second guide structure is configured to guide a movement of the second connecting end relative to the first connecting end.

Further, the second plate body is provided with a second connecting piece at a position corresponding to the supporting piece, and the lower end of the supporting piece is hinged to the second plate body.

According to the above treadmill, a shorter translation stroke of the driving piece is converted into a longer rotating stroke of one end of the supporting piece through the supporting piece. Therefore, a stroke of the driving piece driving the running platform to move up and down can be enlarged, so that in a case that a longer stroke is required for adjustment, in-place adjustment can be achieved within a short time, and the requirement of rapid adjustment by a user can be met while energy consumption, noise and cost are reduced.

### BRIEF DESCRIPTION OF DRAWINGS

The drawings are only used for illustrative description, and cannot be understood as a limitation to this patent; and the same reference numerals are used for components with the same structure and the same function. In the drawings:
FIG. 1 is a schematic diagram of an overall structure of a treadmill according to an embodiment of the present application;
FIG. 2 is a schematic diagram of an overall structure of a treadmill according to another embodiment of the present application;
FIG. 3 is a schematic front view of a structure of a treadmill according to an embodiment of the present application; and
FIG. 4 is a schematic sectional view of a direction A-A in FIG. 3.

Description of reference numerals:
treadmill-100; running platform-1; driving piece-11; first connecting end-1101; second connecting end-1102; supporting piece-12; border-13; first border-1301; second border-1302; supporting foot-14; first plate body-1401; second plate body-1402; first guide structure-15; second guide structure-16; first connecting piece-17; second connecting piece-18; control piece-19; roller-110; lower end-121; upper end 122.

### DESCRIPTION OF EMBODIMENTS

The technical solutions in the embodiments of the present application are described below with reference to the accompanying drawings in the embodiments of the present application. In the description of the embodiments of the present application, "/" represents "or" unless otherwise specified. For example, A/B may indicate A or B; and "and/or" is merely an association relationship that describes associated objects, and indicates that there may be three relationships. For example, A and/or B may represent three cases: only A exists, both A and B exist, and only B exists. In addition, in the description of the embodiments of the present application, "a plurality of" means two or more.

Hereinafter, the terms "first", "second" and the like are used only for description and shall not be interpreted as an indication or implication of relative importance or an implicit indication of the number of technical features. Thus, the feature defined by "first" and "second" can explicitly or implicitly include one or more characteristics.

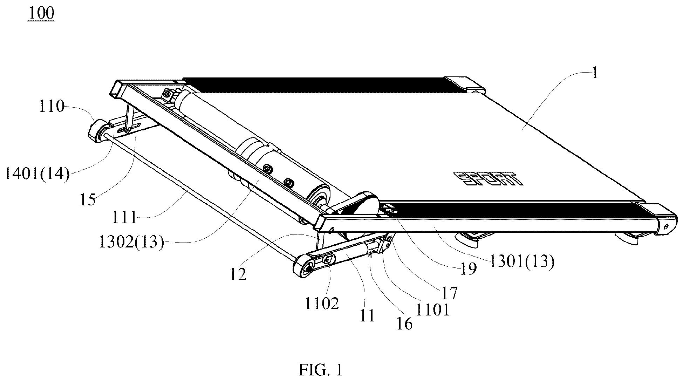

Referring to FIG. 1 to FIG. 4, in this embodiment, exemplarily, the embodiments of the present application provide a treadmill 100, including a running platform 1. The running platform 1 includes a driving piece 11, a supporting piece 12 and a border 13; the border 13 is movably connected to the driving piece 11; the supporting piece 12 is movably connected to the driving piece 11; the supporting piece 12 is movably connected to the border 13; and the driving piece 11 drives the supporting piece 12 to move to drive the border 13 to move.

Specifically, the driving piece 11 includes a first connecting end 1101 and a second connecting end 1102, the first connecting end 1101 is a hinge, and the second connecting end 1102 is a lug.

Specifically, the supporting piece 12 is a connecting rod.

Specifically, the border 13 includes two first borders 1301 and a second border 1302 located between the two first borders 1301, and two ends of the second border 1302 are connected to the two first borders 1301, respectively.

Specifically, the first borders 1301 and the second border 1302 are square steel.

The running platform 1 further includes a supporting foot 14, the supporting foot 14 is rotatably connected to the border 13, and the supporting foot 14 is connected to the supporting piece 12.

The supporting foot 14 includes two first plate bodies 1401.

The supporting foot 14 includes two first plate bodies 1401 and a second plate body 1402 located between the two first plate bodies 1401, and two ends of the second plate body 1402 are connected to the two first plate bodies 1401, respectively. The two first borders 1301 and the second border 1302 are located above the two first plate bodies 1401 and the second plate body 1402.

Specifically, the positions of the two first plate bodies 1401 correspond to the positions of the two first borders 1301, and the second border 1302 and the second plate body 1402 are arranged oppositely.

Optionally, the first border 1301 has a first connecting piece 17; the first connecting piece 17 is specifically a hinge; one side, corresponding to the first connecting piece 17, of the first plate body 1401 has a shaft hole; and the first plate body 1401 is hinged to the first border 1301 through the first connecting piece 17.

The border 13 is rotatably connected to the driving piece 11 Referring to FIG. 1, the driving piece 11 is arranged at the supporting foot 14, the first connecting end 1101 of the driving piece 11 is a hinge, and the driving piece 11 is hinged to the first connecting piece 17 of the first border 1301 through the first connecting end 1101.

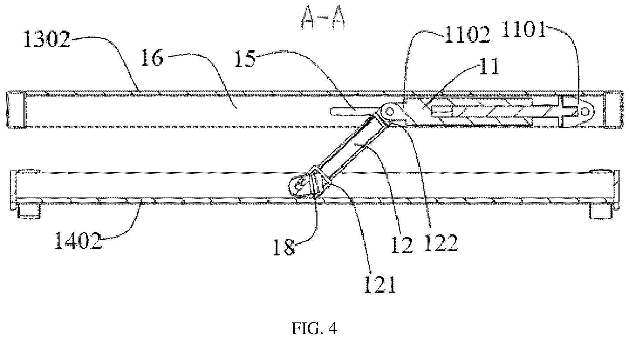

Referring to FIG. 4, the driving piece 11 is arranged at the second border 1302, the first connecting end 1101 of the driving piece 11 is a hinge, the second border 1302 is provided with a first shaft hole at a position corresponding to the first connecting end 1101, and the driving piece 11 is hinged to the first shaft hole of the second border 1302 through the first connecting end 1101.

Optionally, the supporting piece 12 is rotatably connected to the driving piece 11.

Specifically, the second connecting end 1102 is a lug, the lug is provided with a second shaft hole at a position corresponding to the supporting piece 12, the supporting piece 12 is also provided with a third shaft hole at a position corresponding to the second shaft hole of the lug, a shaft penetrates into the second shaft hole of the lug and the third shaft hole of the supporting piece 12, and the supporting piece 12 is rotatably connected to the driving piece 11 through the shaft.

Referring to FIG. 1, one end of the supporting piece 12 is rotatably connected to the border 13, and the other end of the supporting piece 12 is connected to the supporting foot 14 in a translatable manner.

Referring to FIG. 1, the number of the supporting pieces 12 is two; one end, facing the supporting foot 14, of each of the two supporting pieces 12 is slidably connected to the two first plate bodies 1401, respectively; and one end, away from the supporting foot 14, of each of the two supporting pieces 12 is rotatably connected to the two first borders 1301, respectively.

Referring to FIG. 1, the running platform 1 further includes a first guide structure 15; the first guide structure 15 is arranged at the first plate body 1401; and the first guide structure 15 guides the movement of one end, connected to the driving piece 11, of the supporting piece 12.

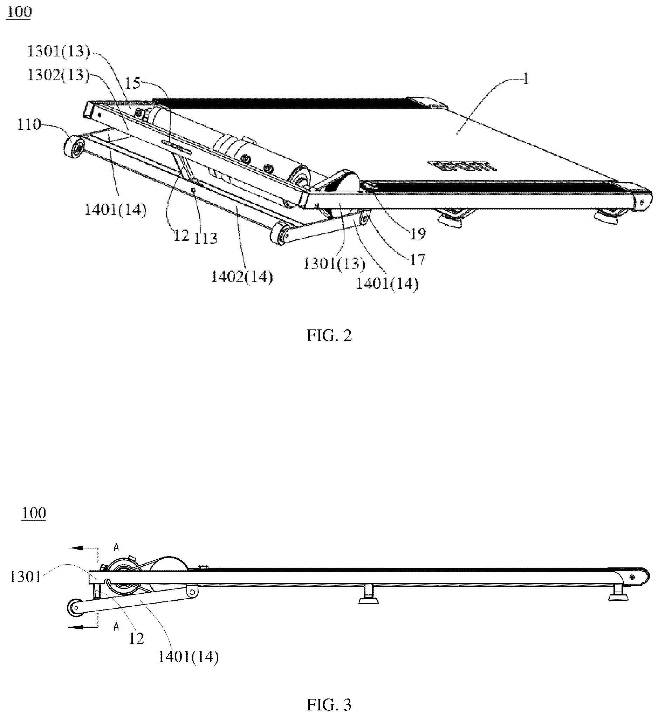

Referring to FIG. 2 to FIG. 4, one end of the supporting piece 12 is rotatably connected to the supporting foot 14, and the other end of the supporting piece 12 is connected to the border 13 in a translatable manner.

Referring to FIG. 2 to FIG. 4, the number of the supporting pieces 12 is one; an upper end 122, facing the supporting foot 14, of the supporting piece 12 is rotatably connected to the second plate body 1402; and a lower end 121, away from the supporting foot 14, of the supporting piece 12 is slidably connected to the second border 1302.

Referring to FIG. 2 to FIG. 4, optionally, the running platform 1 includes a first guide structure 15; the first guide structure 15 is arranged at the second border 1302; and the first guide structure 15 guides the movement of the upper end 122, connected to the driving piece 11, of the supporting piece 12.

The lower end 121, facing the second plate body 1402, of the supporting piece 12 is a hinge; the second plate body 1402 is provided with a second connecting piece 18 at a position corresponding to the supporting piece 12; the second connecting piece 18 is a hinge; and the lower end 121, facing the second plate body 1402, of the supporting piece 12 is hinged to the second plate body 1402.

The first guide structure 15 is a sliding groove; and the upper end 122, connected to the driving piece 11, of the supporting piece 12 is slidably arranged at the sliding groove.

The running platform 1 further includes a second guide structure 16; the driving piece 11 further includes a first connecting end 1101 and a second connecting end 1102; the first connecting end 1101 is rotatably connected to the border 13; the second connecting end 1102 is rotatably connected to the supporting piece 12; the second connecting end 1102 is movable relative to the first connecting end 1101 to drive the supporting piece 12 to move; and the second guide structure 16 guides the movement of the second connecting end 1102 relative to the first connecting end 1101.

Specifically, the second guide structure 16 is specifically a U-shaped groove.

Optionally, the running platform 1 further includes a roller 110, and the roller 110 is arranged at the supporting foot 14.

One implementable working process of the treadmill 100 is as follows: referring to FIG. 1, the control piece 19 is controlled to enable the driving piece 11 to work; the driving piece 11 drives one end, corresponding to the supporting foot 14, of the supporting piece 12 to translate along the first guide structure 15; and at this time, one end, corresponding to the border 13, of the supporting piece 12 rotates around one end, corresponding to the supporting foot 14, of the supporting piece 12, and one end, corresponding to the border 13, of the supporting piece 12 pushes the border 13 to move towards or away from the supporting foot 14.

One implementable working process of the treadmill 100 is as follows: referring to FIG. 2 to FIG. 4, the control piece 19 is controlled to enable the driving piece 11 to work; the driving piece 11 drives the upper end 122, corresponding to the border 13, of the supporting piece 12 to translate along the first guide structure 15; and at this time, the lower end 121, corresponding to the supporting foot 14, of the supporting piece 12 rotates around the upper end 122, corresponding to the border 13, of the supporting piece 12, and the lower end 121, corresponding to the supporting foot 14, of the supporting piece 12 pushes the supporting foot 14 to move towards or away from the border 13.

According to the above treadmill 100, a shorter translation stroke of the driving piece is converted into a longer rotating stroke of one end of the supporting piece through the supporting piece. Therefore, a stroke of the driving piece driving the running platform to move up and down can be enlarged, so that in a case that a longer stroke is required for adjustment, in-place adjustment can be achieved within a short time, and the requirement of rapid adjustment by a user can be met while energy consumption, noise and cost are reduced.

In the description of the embodiments, unless otherwise specified, "a plurality of" means two or more. The foregoing descriptions are merely specific embodiments of the present application, but are not intended to limit the protection scope of this application. Any variation or replacement within the technical scope disclosed in this application shall fall within the protection scope of the present application. The invention is defined by the appended claims.

## Claims

1. A treadmill, comprising a running platform (1), the running platform (1) comprising a driving piece (11), a supporting piece (12), a border (13), and a supporting foot (14); the border (13) comprising two first borders (1301) and a second border (1302) located between the two first borders (1301), and two ends of the second border (1302) being connected to the two first borders (1301), respectively; the supporting foot (14) comprising two first plate bodies (1401) and a second plate body (1402) located between the two first plate bodies (1401), and two ends of the second plate body (1402) being connected to the two first plate bodies (1401), respectively; **characterized in that** the two first borders (1301) and the second border (1302) are located above the two first plate bodies (1401) and the second plate body (1402), the running platform (1) further comprises a first guide structure (15), the first guide structure (15) is arranged at the second border (1302) and the first guide structure (15) is a sliding groove, the driving piece (11) is arranged at the second border (1302); a lower end (121) of the supporting piece (12) is rotatably connected to the second plate body (1402); an upper end (122) of the supporting piece (12) is slidably connected to the second border (1302); the upper end (122) of the supporting piece (12) is slidably arranged at the sliding groove; the driving piece (11) is configured to drive the upper end (122) of the supporting piece (12) to translate along the sliding groove such that the lower end (121) of the supporting piece (12) rotates around the upper end (122) of the supporting piece (12), and the lower end (121) of the supporting piece (12) pushes the supporting foot (14) to move towards or away from the border (13).

2. The treadmill according to claim 1, wherein the driving piece (11) comprises a first connecting end (1101) and a second connecting end (1102), the first connecting end (1101) is a hinge, the second border (1302) is provided with a first shaft hole at a position corresponding to the first connecting end (1101), and the first connecting end (1101) is hinged to the first shaft hole of the second border (1302); the second connecting end (1102) is a lug, the lug is provided with a second shaft hole at a position corresponding to the supporting piece (12), the supporting piece (12) is provided with a third shaft hole at a position corresponding to the second shaft hole of the lug, a shaft penetrates into the second shaft hole of the lug and the third shaft hole of the supporting piece (12) to rotatably connect the supporting piece (12) to the driving piece (11).

3. The treadmill according to claim 2, wherein the running platform (1) further comprises a second guide structure (16), wherein the second guide structure (16) is a U-shaped groove and is arranged at the second border (1302), and the second guide structure (16) is configured to guide a movement of the second connecting end (1102) relative to the first connecting end (1101).

4. The treadmill according to claim 3, wherein the second plate body (1402) is provided with a second connecting piece (18) at a position corresponding to the supporting piece (12), and the lower end (121) of the supporting piece (12) is hinged to the second plate body (1402).

## Patentansprüche

1. Laufband mit einer Laufplattform (1), wobei die Laufplattform (1) ein Antriebsteil (11), ein Stützteil (12), einen Rahmen (13) und einen Stützfuß (14) umfasst; der Rahmen (13) zwei erste Ränder (1301) und einen zweiten Rand (1302) umfasst, der sich zwischen den beiden ersten Rändern (1301) befindet, und die zwei Enden des zweiten Randes (1302) jeweils mit den beiden ersten Rändern (1301) verbunden sind; der Stützfuß (14) zwei erste Plattenkörper (1401) und einen zweiten Plattenkörper (1402) umfasst, der sich zwischen den beiden ersten Plattenkörpern (1401) befindet, und die zwei Enden des zweiten Plattenkörpers (1402) jeweils mit den beiden ersten Plattenkörpern (1401) verbunden sind; **dadurch gekennzeichnet, dass** die beiden ersten Ränder (1301) und der zweite Rand (1302) sich oberhalb der beiden ersten Plattenkörper (1401) und des zweiten Plattenkörpers (1402) befinden, und die Laufplattform (1) ferner eine erste Führungsstruktur (15) umfasst, wobei die erste Führungsstruktur (15) an dem zweiten Rand (1302) angeordnet ist und die erste Führungsstruktur (15) eine Gleitnut ist, das Antriebsteil (11) an dem zweiten Rand (1302) angeordnet ist; ein unteres Ende (121) des Stützteils (12) drehbar mit dem zweiten Plattenkörper (1402) verbunden ist; ein oberes Ende (122) des Stützteils (12) gleitend mit dem zweiten Rand (1302) verbunden ist; das obere Ende (122) des Stützteils (12) gleitend an der Gleitnut angeordnet ist; das Antriebsteil (11) so ausgebildet ist, dass es das obere Ende (122) des Stützteils (12) zum Verschieben entlang der Gleitnut antreibt, so dass sich das untere Ende (121) des Stützteils (12) um das obere Ende (122) des Stützteils (12) dreht, und das untere Ende (121) des Stützteils (12) den Stützfuß (14) drückt, damit er sich auf den Rahmen (13) zu oder von ihm weg bewegt.

2. Laufband nach Anspruch 1, wobei das Antriebsteil (11) ein erstes Verbindungsende (1101) und ein zweites Verbindungsende (1102) umfasst, wobei das erste Verbindungsende (1101) ein Scharnier ist, der zweite Rand (1302) mit einem ersten Schaftloch an einer mit dem ersten Verbindungsende (1101) korrespondierenden Position versehen ist, und das erste Verbindungsende (1101) an dem ersten Schaftloch des zweiten Randes (1302) angelenkt ist; und wobei das zweite Verbindungsende (1102) eine Nase ist, die mit einem zweiten Schaftloch an einer mit dem Stützteil (12) korrespondierenden Position versehen ist, das Stützteil (12) mit einem dritten Schaftloch an einer mit dem zweiten Schaftloch der Nase korrespondierenden Position versehen ist, wobei ein Schaft in das zweite Schaftloch der Nase und das dritte Schaftloch des Stützteils (12) eindringt, um das Stützteil (12) drehbar mit dem Antriebsteil (11) zu verbinden..

3. Laufband nach Anspruch 2, wobei die Laufplattform (1) ferner eine zweite Führungsstruktur (16) umfasst, wobei die zweite Führungsstruktur (16) eine U-förmige Nut ist und an dem zweiten Rand (1302) angeordnet ist, und die zweite Führungsstruktur (16) so ausgebildet ist, dass sie eine Bewegung des zweiten Verbindungsendes (1102) relativ zu dem ersten Verbindungsende (1101) führt.

4. Laufband nach Anspruch 3, wobei der zweite Plattenkörper (1402) mit einem zweiten Verbindungsstück (18) an einer mit dem Stützteil (12) korrespondierenden Position versehen ist, und das untere Ende (121) des Stützteils (12) an dem zweiten Plattenkörper (1402) angelenkt ist.

## Revendications

1. Un tapis de course, comprenant une plateforme de course (1), la plateforme de course (1) comprenant une pièce d'entraînement (11), une pièce de support (12), une bordure (13), et un pied de support (14) ; la bordure (13) comprenant deux premières bordures (1301) et une seconde bordure (1302) située entre les deux premières bordures (1301), et deux extrémités de la seconde bordure (1302) étant reliées aux deux premières bordures (1301), respectivement ; le pied de support (14) comprenant deux premiers corps de plaque (1401) et un second corps de plaque (1402) situé entre les deux premiers corps de plaque (1401), et deux extrémités du second corps de plaque (1402) étant reliées aux deux premiers corps de plaque (1401), respectivement ; **caractérisé en ce que** les deux premières bordures (1301) et la seconde bordure (1302) sont situées au-dessus des deux premiers corps de plaque (1401) et du second corps de plaque (1402), la plateforme de course (1) comprend en outre une première structure de guidage (15), la première structure de guidage (15) est agencée au niveau de la seconde bordure (1302) et la première structure de guidage (15) est une rainure de coulissement, la pièce d'entraînement (11) est agencée au niveau de la seconde bordure (1302) ; une extrémité inférieure (121) de la pièce de support (12) est reliée de manière rotative au second corps de plaque (1402) ; une extrémité supérieure (122) de la pièce de support (12) est reliée de manière coulissante à la seconde bordure (1302) ; l'extrémité supérieure (122) de la pièce de support (12) est agencée de manière coulissante dans la rainure de coulissement ; la pièce d'entraînement (11) est configurée pour entraîner l'extrémité supérieure (122) de la pièce de support (12) à se déplacer en translation le long de la rainure de coulissement de telle sorte que l'extrémité inférieure (121) de la pièce de support (12) pivote autour de son extrémité supérieure (122), et l'extrémité inférieure (121) de la pièce de support (12) pousse le pied de support (14) à se rapprocher ou à s'éloigner de la bordure (13).

2. Le tapis de course selon la revendication 1, dans lequel la pièce d'entraînement (11) comprend une première extrémité de liaison (1101) et une seconde extrémité de liaison (1102), la première extrémité de liaison (1101) est une charnière, la seconde bordure (1302) est pourvue d'un premier trou d'arbre à une position correspondant à la première extrémité de liaison (1101), et la première extrémité de liaison (1101) est articulée au premier trou d'arbre de la seconde bordure (1302) ; la seconde extrémité de liaison (1102) est une patte, la patte est pourvue d'un deuxième trou d'arbre à une position correspondant à la pièce de support (12), la pièce de support (12) est pourvue d'un troisième trou d'arbre à une position correspondant au deuxième trou d'arbre de la patte, un arbre pénètre dans le deuxième trou d'arbre de la patte et le troisième trou d'arbre de la pièce de support (12) pour relier rotativement la pièce de support (12) à la pièce d'entraînement (11).

3. Le tapis de course selon la revendication 2, dans lequel la plateforme de course (1) comprend en outre une seconde structure de guidage (16), ladite seconde structure de guidage (16) étant une rainure en forme de U agencée au niveau de la seconde bordure (1302), et la seconde structure de guidage (16) étant configurée pour guider un mouvement de la seconde extrémité de liaison (1102) par rapport à la première extrémité de liaison (1101).

4. Le tapis de course selon la revendication 3, dans lequel le second corps de plaque (1402) est pourvu d'une seconde pièce de liaison (18) à une position correspondant à la pièce de support (12), et l'extrémité inférieure (121) de la pièce de support (12) est articulée au second corps de plaque (1402).
